# EUROPEAN PATENT SPECIFICATION

(11) **EP 4 424 277 B1**
(45) Date of publication and mention of the grant of the patent: **25.11.2026**
(21) Application number: 22903066.3
(22) Date of filing: 28.10.2022
(51) Int. Cl.: A61C 17/02, F04B 17/03, F04B 53/14, F04B 53/16

(54) **ORAL IRRIGATOR**
MUNDDUSCHE
IRRIGATEUR BUCCAL

(30) Priority: 06.12.2021 CN 202111511597
(43) Date of publication of application: 04.09.2024
(73) Proprietor: Shanghai Shift Electrics Co., Ltd., Shanghai 201506 (CN)
(72) Inventor: DAI, Xiaoguo, Shanghai 201506 (CN); XU, Zhenwu, Shanghai 201506 (CN)
(74) Representative: WSL Patentanwälte Partnerschaft mbB
(86) International application number: PCT/CN2022/128162
(87) International publication number: WO 2023/103642

(56) References cited:
- CN-A- 110 638 545
- CN-A- 113 730 007
- CN-U- 208 823 022
- CN-U- 208 823 022
- US-A1- 2016 151 133

## Description

### Technical Field

The present invention relates to the technical field of oral care devices, and in particular, to an oral irrigator.

### Background Art

There have been oral irrigators using plunger pumps on the market. A driving gear is driven by utilizing a miniature electric motor, the driving gear drives a driven crown gear, the driven crown gear drives a connecting rod, the connecting rod is eccentrically connected to the crown gear, the other end of the connecting rod is connected to a piston, and the piston is restrained in a piston cylinder and is driven by the electric motor to perform a reciprocating linear movement in the piston cylinder. A first edge is distributed on the piston in a direction away from the electric motor, and the first edge of the piston is in an interference fit or at least in zero fit with the piston cylinder to achieve the static seal and the dynamic seal between the piston and the piston cylinder, such that above the first edge of the piston, a space with an alternating volume is formed between the piston and the piston cylinder, and the pressure of a gas or a liquid in the space fluctuates periodically to achieve water suction and water ejection or/and gas suction and gas ejection of the plunger pump.

There are two implementations for piston assemblies of conventional oral irrigators.

According to a first implementation, a tail opening remains open, and there is only one sealed cavity above the first edge of the piston, between the piston and the piston cylinder. During the life cycle of a product, the first edge of the piston and the piston cylinder are worn due to the high-speed reciprocating friction between the piston and the piston cylinder, causing a sealing problem to occur between the piston and the piston cylinder, that is, sealing fails between the piston and the piston cylinder. The liquid or the gas above the first edge of the piston is then leaked to the tail opening of the piston cylinder, and particularly, the leaked liquid is further leaked to parts such as a battery, the electric motor and a PCBA, so that the corrosion of the battery, the electric motor and the PCBA, short circuiting, and other faults are caused, resulting in a device failure.

According to a second implementation, a sealing member is added at the tail opening to seal the space between the piston and the piston cylinder below the first edge of the piston, there are two sealed cavities between the piston and the piston cylinder, one cavity is an upper sealed cavity located above the first edge of the piston, and the other cavity is a lower sealed cavity located below the first edge of the piston. During the life cycle of the product, the first edge of the piston and the piston cylinder are worn due to the high-speed reciprocating friction between the piston and the piston cylinder, causing a sealing problem to occur between the piston and the piston cylinder, that is, the upper sealed cavity between the piston and the piston cylinder fails to be sealed. The liquid or the gas above the first edge of the piston is then leaked to the lower sealed space of the piston cylinder, causing the pressure in the lower sealed space and the resistance of the plunger pump to increase, so that the mechanical efficiency of a device is greatly reduced, and the performance of the device is deteriorated. In addition, when the gas or the liquid leaked from the upper sealed cavity to the lower sealed cavity continues to increase, a lower sealing member of the lower sealed cavity is broken, thus causing the liquid or the gas to be leaked to a space outside the piston cylinder, and particularly, the leaked liquid is further leaked to the parts such as the battery, the electric motor and the PCBA, so that the corrosion of the battery, the electric motor and the PCBA, short circuiting, and other faults are caused, resulting in a device failure.

CN 110638545 A discloses a hand-held tooth flushing device pump body combined device. The device comprises a water inlet elbow, a valve plate, a pump body, a piston, a connecting rod and a piston failure return system; the pump body is provided with a water inlet joint; the water inlet elbow is in sealing connection with the water inlet joint; the valve plate is arranged between the water inlet elbow and the water inlet joint; the piston is arranged at the other end of the pump body; the connecting rod is arranged on the piston; and the pump body is provided with the piston failure return system.

US 2016/0151133 A1 discloses an oral irrigator including a motor, a pump body, a connecting rod, and a diaphragm seal. The connecting rod is at least partially received within the pump body and is movably connected to the motor such that the motor moves the connecting rod between a first position and a second position within the pump body. The diaphragm seal is connected to the connecting rod and the pump body and deforms from a first orientation to a second orientation as the connecting rod moves from the first position to the second position.

CN 208823022 U discloses an oral irrigator water pumping device and an oral irrigator thereof, which comprise a power mechanism and a water pump main body in transmission connection with the power mechanism. The water pump main body comprises a pump cylinder and a piston arranged in the pump cylinder, and the pump cylinder is provided with a reflux mechanism capable of refluxing and recycling leaked water generated at the rear end of the piston.

The existing solutions still have a shortcoming in terms of waterproofing reliability, and need to be further improved.

### Summary of the Invention

The invention is as defined in the appended claims.

In order to overcome the shortcomings of the prior art, the present invention discloses an oral irrigator, comprising a plunger pump device for pumping a fluid, the plunger pump device comprising: a piston cylinder, a piston cavity being enclosed by a side wall of the piston cylinder; a piston arranged in the piston cavity for a reciprocating movement; and a sealing member connected to the piston cylinder in a sealing manner; wherein a first cavity is enclosed by the piston, a first portion of the side wall of the piston cylinder, and the sealing member; a second cavity is enclosed by the piston, and a second portion of the side wall of the piston cylinder; the first cavity and the second cavity are respectively located at two opposite ends of the piston; and wherein a first through hole for communicating the first cavity with the outside of the first cavity is provided, and as a pressure of the first cavity alternately varies with the reciprocating movement of the piston in the piston cavity, the fluid in the first cavity can flow out of the first cavity by means of the first through hole. According to the invention, a third cavity is provided adjacent to the second cavity, and a first one-way valve is provided between the third cavity and the second cavity and is arranged to only allow the fluid to enter the third cavity from the second cavity through the spout, wherein the first through hole is in communication with the third cavity by means of a communication pipe, and a second one-way valve is provided between the first through hole and the third cavity and is arranged to only allow the fluid to enter the third cavity from the first cavity. Furthermore, the plunger pump device is further provided with a second through hole for communicating the first cavity with the outside of the first cavity, the second through hole is provided with a third one-way valve, which is arranged to only allow an external fluid to enter the first cavity through the second through hole.

If a liquid penetrates into the first cavity V1, typically due to a failure of the sealing between the piston and the piston cylinder, this part of the liquid may be discharged out of the first cavity V1 by means of an alternating pressure in the first cavity V1 thanks to the arrangement of the first through hole, and the separation of the liquid from electricity is thus ensured. Since the first cavity V1 formed by the sealing member does not need to bear the pressure of the accumulated liquid, the service life of the sealing member is prolonged, which improves the overall waterproofing level of the oral irrigator.

According to another aspect of the present invention, the second cavity is provided with an inlet and a spout, and the oral irrigator comprises a liquid storage portion which is in communication with the inlet of the second cavity by means of a communication pipeline.

According to another aspect of the present invention, the first through hole is provided in the sealing member and/or the first portion of the side wall of the piston cylinder, the first through hole is in communication with the outside of a handle portion of the oral irrigator by means of a communication pipe, and/or the first through hole is in communication with the liquid storage portion or is connected to the communication pipeline of the liquid storage portion.

According to the present invention, a third cavity V3 is provided adjacent to the second cavity V2, and a first one-way valve is provided between the third cavity and the second cavity and is arranged to only allow the fluid to enter the third cavity from the second cavity through the spout, wherein the first through hole is in communication with the third cavity by means of a communication pipe, and a second one-way valve is provided between the first through hole and the third cavity and is arranged to only allow the fluid to enter the third cavity from the first cavity. The plunger pump device is further provided with a second through hole for communicating the first cavity with the outside of the first cavity, the second through hole is provided with a third one-way valve, and the third one-way valve is arranged to only allow an external fluid to enter the first cavity through the second through hole.

According to a further aspect of the present invention, the plunger pump device further comprises a transmission mechanism, the transmission mechanism comprising a driving gear fixed to an output shaft of an electric motor, a driven crown gear meshing with the driving gear, and a connecting rod movably fitted with the driven crown gear, wherein the connecting rod has a connecting portion movably connected to a connecting cavity of the piston, and the connecting rod engages with the sealing member in a sealing manner such that at least a part of the sealing member moves with the movement of the connecting rod, the connecting portion has two opposite flat surfaces and a partial spherical surface connected to the opposite flat surfaces, and a pin extends from the flat surfaces and is inserted into a pin hole formed in the piston.

According to a further aspect of the present invention, the piston has a first end close to the first cavity and a second end close to the second cavity, and the first end and the second end of the piston respectively form a first sealing portion and a second sealing portion which abut against an inner surface of an internal cavity of the piston cylinder in a sealing manner.

Preferably, the piston has a first deformable thin-walled portion located at the first end and a second deformable thin-walled portion located at the second end, the first sealing portion is formed on an outer peripheral surface of an end portion of the first thin-walled portion, and the second sealing portion is formed on an outer peripheral surface of an end portion of the second thin-walled portion.

Preferably, the first thin-walled portion at the first end has a recess positioned to correspond to the first through hole.

According to another aspect of the present invention, pressures of the first cavity and the second cavity alternately vary with the reciprocating movement of the piston in the piston cavity, such that the first sealing portion and the second sealing portion alternately bear the pressures.

According to another aspect of the present invention, the first sealing portion and the second sealing portion are in an interference fit or zero fit with an inner surface of the piston cylinder, and the remaining outer surface between the first sealing portion and the second sealing portion is in a clearance fit with the inner surface of the piston cylinder.

According to another aspect of the present invention, the piston has a first deformable thin-walled portion located at the first end and a second deformable thin-walled portion located at the second end, the first sealing portion is formed on an outer peripheral end edge of the first thin-walled portion, and the second sealing portion is formed on an outer peripheral end edge of the second thin-walled portion.

Preferably, the ratio of the length to the thickness of each of the first thin-walled portion and the second thin-walled portion is in a range of 20-40.

When the first cavity has a first through hole, if a liquid penetrates into the first cavity, typically due to a failure of the sealing between the piston and the piston cylinder, this part of the liquid may be discharged out of the first cavity by means of an alternating pressure in the first cavity thanks to the arrangement of the first through hole, and the separation of the liquid from electricity is thus ensured. Since the first cavity formed by the sealing member does not need to bear the pressure of the accumulated liquid, the service life of the sealing member is prolonged, which improves the overall waterproofing level of the oral irrigator.

When the first through hole is opened to a nozzle portion, thanks to an oxygen-containing gas from the first cavity, anaerobic bacteria can be effectively removed by ejecting the oxygen-containing gas deep into the gingival sulcus, and the gums can be kept healthy. Compared with an existing method of adding active oxygen, a function of adding active oxygen is added by means of the alternating pressure of the first cavity, so that the manufacturing cost is lower.

In addition, with the arrangement of the second through hole, the air in the first cavity can be supplemented, so that the air from the outside of the piston cylinder can push the piston away from the electric motor. Since the work done by the outside air on the piston is added, the energy consumption of the oral irrigator is reduced accordingly.

Moreover, compared with the solution in which the piston has only a single sealing portion, the solution in which the piston has two sealing portions according to the present invention can more reliably form the sealing between the piston and the piston cylinder, improving the leak-proof reliability of the whole plunger pump device.

### Brief Description of the Drawings

For a more complete understanding of the present invention, the following description of exemplary embodiments can be considered with reference to the drawings, in which:
FIG. 1 is a schematic view of an appearance of an oral irrigator according to a preferred embodiment of the present invention.
FIG. 2 is a perspective view of an oral irrigator according to a preferred embodiment of the present invention, with part of a shell removed to show an internal structure.
FIG. 3 is a perspective view of a plunger pump device for pumping a fluid inside an oral irrigator according to a first preferred embodiment of the present invention.
FIG. 4 is a partial cross-sectional perspective view of the plunger pump device for pumping the fluid inside the oral irrigator according to the first preferred embodiment of the present invention.
FIG. 5 is a partial cross-sectional perspective view of a piston and a piston cylinder according to the first preferred embodiment of the present invention, with the piston moving toward an electric motor.
FIG. 6 is another partial cross-sectional perspective view of the piston and the piston cylinder according to the first preferred embodiment of the present invention, with the piston moving away from a second end of the electric motor.
FIG. 7 is another partial cross-sectional perspective view of the piston and the piston cylinder according to the first preferred embodiment of the present invention, with the piston cylinder cut away to show a through hole therein.
FIG. 8 is a partial perspective view of an internal pipeline structure of the oral irrigator according to the first preferred embodiment of the present invention.
FIG. 9 is a partial perspective view of an internal pipeline structure of an oral irrigator according to a second preferred embodiment of the present invention.
FIG. 10 is a perspective view of a plunger pump device inside the oral irrigator according to the second preferred embodiment of the present invention, with a piston cylinder cut away to show a through hole therein.
FIG. 11 is a partial perspective view of the plunger pump device inside the oral irrigator according to the second preferred embodiment of the present invention.
FIG. 12 is a partial perspective view of a plunger pump device inside an oral irrigator according to a preferred embodiment of the present invention from another perspective.
FIG. 13 is a cross-sectional perspective view of a piston applicable in a preferred embodiment of the present invention.

### Reference signs:

1 Liquid storage portion
2 Handle portion
3 Nozzle portion
4 Control circuit
5 Battery
6 Frame
7 Electric motor
8 Driving gear
9 Communication pipe
9' Communication pipe
10 Suction pipe
11 Liquid storage portion holder
12 Communication interface
13 Sealing member of communication interface
14 Communication hole of liquid storage portion holder
15 Inlet
16 Spout
21 Sealing member
22 Sealing member securing block
23 Piston cylinder
23' Piston cylinder
24 Piston
24' Piston
25 Pin
26 Connecting rod
261 Connecting portion
27 Driven crown gear
28 One-way valve
29 One-way valve
30 First through hole
31 Ejection hole
32 Entry hole
33 One-way valve
34 Through hole
35 One-way valve
36 Sealing member
230 Inner surface of piston cylinder
240 Second sealing portion
241 Second thin-walled portion
242 First sealing portion
243 First thin-walled portion
244 Pin hole
V1 First cavity
V2 Second cavity
V3 Third cavity

### Detailed Description of Embodiments

The present invention will be further described below with reference to specific embodiments and drawings, and more details are set forth in the following description to facilitate a full understanding of the present invention. However, the present invention can obviously be implemented in many other ways than as described herein, and those skilled in the art can make similar promotions and deductions based on practical applications without departing from the essence of the present invention. Therefore, the scope of protection of the present invention should not be limited to the content of the specific embodiments.

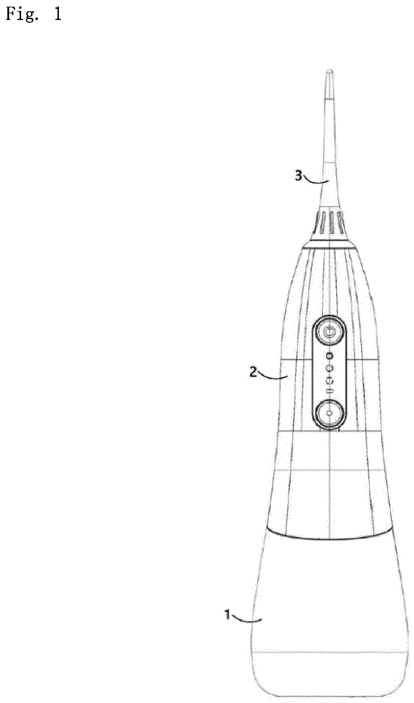

FIG. 1 shows a schematic view of an appearance of an oral irrigator according to a preferred embodiment of the present invention. Viewed from the external shape, the oral irrigator mainly comprises a liquid storage portion 1 for storing water, a handle portion 2 suitable for a user to hold with one hand, and an elongated nozzle portion 3. The nozzle portion 3 and the liquid storage portion 1 are connected to two opposite ends of the handle portion 2 respectively, such that these three portions 1, 2 and 3 are removably connected together.

Each functional component of the oral irrigator is basically accommodated in a cavity enclosed by a shell of the handle portion 2. Specifically, the cavity of the handle portion 2 accommodates a pipeline system for delivering a fluid, a driving device for providing a cleaning force to the fluid, a plunger pump device for converting the driving device into the cleaning force of the fluid, a battery 5 for providing power to the driving device, and a corresponding control device. In a preferred embodiment according to the present invention, an electric motor 7 is used as the driving device. In use, the electric motor 7 drives a piston in the plunger pump device to perform a reciprocating movement in a piston cylinder, and the liquid accommodated in the liquid storage portion 1 is delivered to the nozzle portion 3 through a corresponding pipeline under the reciprocating action of the plunger pump device, such that the liquid is ejected from the nozzle portion 3 in a pulsating manner, to clean the oral cavity, especially the teeth and the gums.

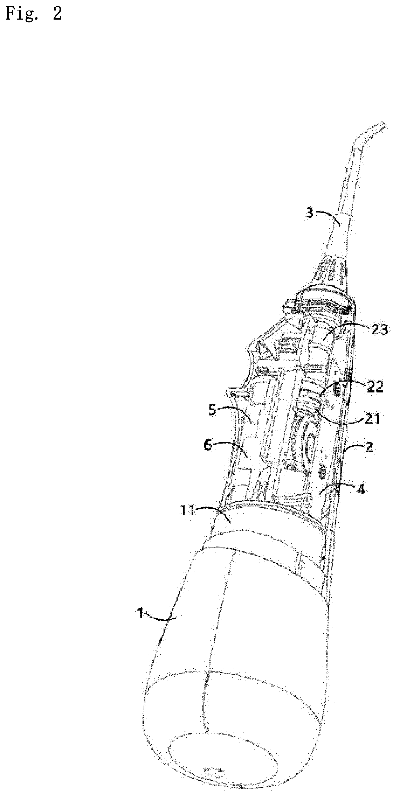

A preferred arrangement in the cavity of the handle portion 2 of the oral irrigator is shown in FIG. 2. The plunger pump device and the battery 5 are retained within the cavity of the handle portion 2 by means of a frame 6. Preferably, the plunger pump device and the battery 5 are arranged side by side.

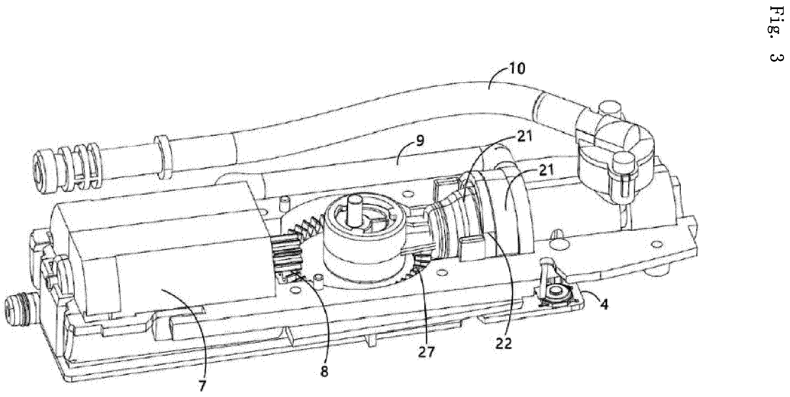

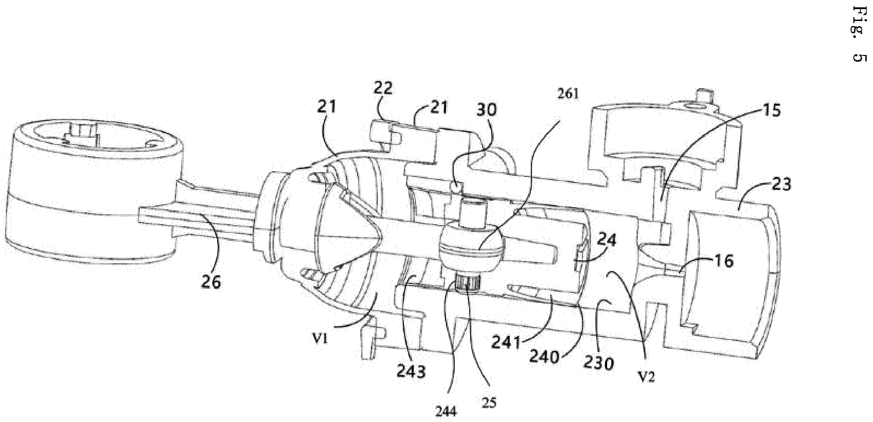

The plunger pump device mainly comprises a piston cylinder 23, a piston 24, and a transmission mechanism connected between the piston 24 and the electric motor 7. The piston cylinder 23 has a side wall, a substantially cylindrical piston cavity is enclosed by the side wall, and the piston 24 is arranged in the piston cavity to perform the reciprocating movement. As shown in FIG.3, the transmission mechanism comprises a driving gear 8 fixed to an output shaft of the electric motor 7, a driven crown gear 27 meshing with the driving gear 8, and a connecting rod 26 movably fitted with the driven crown gear 27. The connecting rod 26 has a connecting portion 261. The connecting portion 261 is movably connected to a connecting cavity in the piston 24, the connecting rod 26 passes through the sealing member 21 in a sealed state, and the movement of the connecting rod 26 can drive a part of the sealing member 21 connected to the connecting rod 26 to move. The connecting rod 26 is connected in the connecting cavity of the piston 24 by means of the fitting between a pin 25 and a pin hole 244 (see FIG.5). Specifically, the connecting portion 261 of the connecting rod 26 has two opposite flat surfaces and a partial spherical surface connected to the opposite flat surfaces. One pin 25 passes through the connecting portion 261 and extends out from two ends of the flat surfaces thereof, and the pin 25 is inserted into the pin hole 244 formed in the piston 24, such that the pin 25 can pivot relative to the piston connecting portion 261, and accordingly the partial spherical surface of the connecting portion 261 can move relative to the connecting cavity of the piston 24. By means of the transmission mechanism, a rotational movement of the output shaft of the electric motor 7 is converted into a linear reciprocating movement of the piston 24 in the piston cylinder 23.

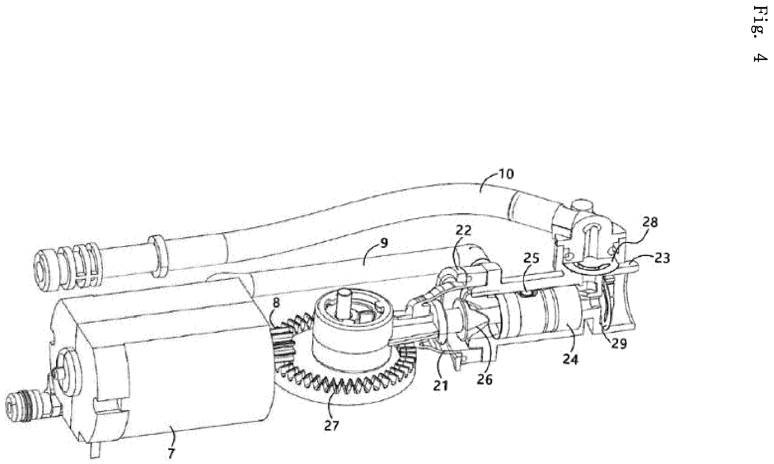

Next, the structures of the piston cylinder 23 and the piston 24 according to a first embodiment of the present invention will be described in detail with reference to FIGS. 4 and 5.

As shown in FIG. 5, when the piston 24 is arranged in the piston cylinder 23, at least one sealing portion of an outer surface of the piston 24 is in sealed contact with an inner surface 230 of the side wall of the piston cylinder 23, so that the piston cavity is divided into at least two cavities, which are hereafter referred to as a first cavity V1 and a second cavity V2. The first cavity V1 is enclosed by the piston 24, a first portion of the side wall of the piston cylinder 23 and the sealing member 21 (also referred to as a cup) connected to the piston cylinder 23, while the second cavity V2 is enclosed by the piston 24 and a second portion of the side wall of the piston cylinder 23, and the first cavity V1 and the second cavity V2 are formed respectively at two opposite ends of the piston 24. The "first portion" of the side wall of the piston cylinder 23 herein refers to a section of the side wall, which is from a position of a portion of the inner surface of the piston cylinder 23 sealed relative to the piston 24 that is closest to a first end of the piston, to an end portion of the piston cylinder close to the sealing member. For example, when only an outer peripheral end edge of the second end of the piston 24 is sealed relative to the inner surface 230 of the piston cylinder 23, the "first portion" herein refers to a section of the side wall, which is from a position of the outer peripheral end edge of the second end that is closest to the first end of the piston 24, to the end portion of the piston cylinder 23 close to the sealing member. Correspondingly, the "second portion" of the side wall of the piston cylinder 23 refers to a section of the side wall, which is from a position of the portion of the inner surface of the piston cylinder 23 sealed relative to the piston 24 that is closest to a second end of the piston, to a position of the piston cylinder closest to a spout 16. For example, when only the outer peripheral end edge of the second end of the piston 24 is sealed relative to the inner surface 230 of the piston cylinder 23, the "second portion" herein refers to a section of the side wall of the piston cylinder, which is from a position of the edge of the second end of the piston 24 to a position of the piston cylinder 23 closest to the spout 16. It should be understood that the first portion and the second portion of the side wall of the piston cylinder 23 change with the movement of the piston and the setting changes in the sealing portions of the piston 24, and as the first portion and the second portion change, the volumes of the first cavity V1 and the second cavity V2 change accordingly.

Specifically, the first cavity V1 is formed at the first end of the piston 24 close to the sealing member 21, while the second cavity V2 is formed at the second end close to the nozzle portion 3. The first cavity V1 and the second cavity V2 are relatively sealed and isolated from each other, and the sealing and isolation between the two cavities are achieved by means of the sealed contact of the piston 24 relative to the inner surface 230 of the piston cylinder 23.

As further shown in FIG. 5, the second cavity V2 is provided with an inlet 15 and the spout 16. The liquid storage portion 1 is connected to the inlet 15 via a suction pipe 10 (see FIG. 3), such that the liquid in the liquid storage portion 1 can be suctioned into the second cavity V2 through the inlet 15 and be led to the downstream nozzle portion 3 through the spout 16 under the action of the piston 24, that is to say, the second cavity V2 constitutes a fluid cavity enabling the piston 24 to act. The spout 16 of the second cavity V2 is in communication with the nozzle portion 2, and the fluid entering the second cavity V2 is ejected from the spout 16. The volume of the second cavity V2 changes with the reciprocating movement of the piston 24, so that the suction and ejection of the fluid are achieved. The second cavity V2 constitutes a main ejection cavity of the plunger pump device to achieve water suction and ejection.

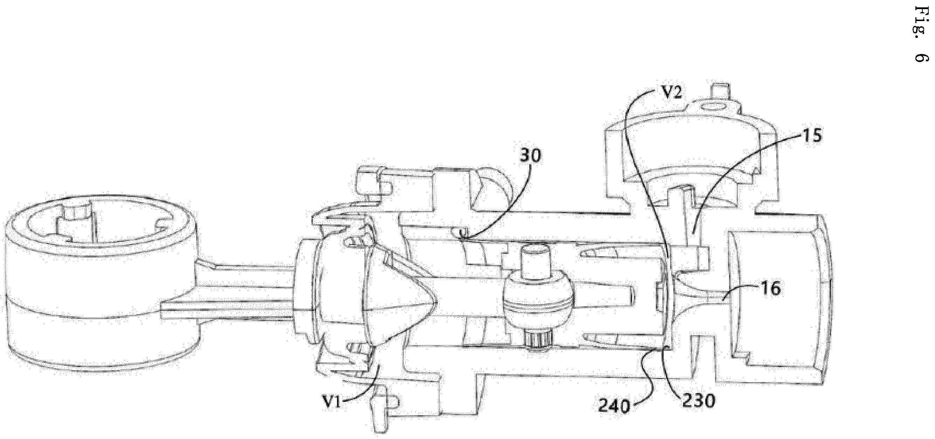

The sealing member 21 enclosing the first cavity V1 is in the form of a bowl, and a bowl-shaped opening thereof is attached to an end portion of the piston cylinder 23. Preferably, the sealing member 21 may be securely attached to a surface of the end portion of the piston cylinder 23 by means of a sealing member securing block 22. As shown in FIGS. 5 and 6, in order to adapt to the transmission mechanism having the connecting rod 26, the connecting rod 26 passes through the bottom of the sealing member 21, such that the sealing member 21 and the connecting rod 26 are in a sealed connection state. The sealing member 21 is generally made of an elastically deformable and waterproof material, for example, rubber. For example, the sealing member may be integrated with the piston cylinder 23 in an over-molding manner, or the sealing member 21 and the piston cylinder 23 may be manufactured separately and then assembled together. By means of the arrangement of the sealing member 21, the piston cavity of the piston cylinder 23 is separated in a sealing manner from the space for accommodating the components such as the electric motor 7. In this way, even if there is no problem of poor sealing between the piston 24 and the piston cylinder 23 and the liquid flows into the first cavity V1 from the piston 24 and the piston cylinder 23, the liquid can be blocked by the sealing member 21, to prevent the liquid from further flowing to the electric motor 7 or other control circuits 4 to cause the damage to electrical components.

A part of the sealing member 21 and the piston 24 can move with the movement of the connecting rod 26. FIGS. 5 and 6 respectively show two positions of the piston 24 relative to the piston cylinder 23. As shown in FIG. 5, the piston 24 moves toward the ejection port 16, and in this case, the sealing member 21 is in an expanded state, and the second cavity V2 is in a largest-volume state, while the first cavity V1 is in a smallest-volume state. As shown in FIG. 6, the piston 24 moves toward the sealing member 21, and in this case, the sealing member 21 is in a collapsed state, and the second cavity V2 is in the smallest-volume state, while the second cavity V2 is in the largest-volume state. Meanwhile, with the reciprocating movement of the piston 24 in the piston cavity and the expansion and collapse of the sealing member 21, respective internal pressures of the first cavity V1 and the second cavity V2 also alternately vary.

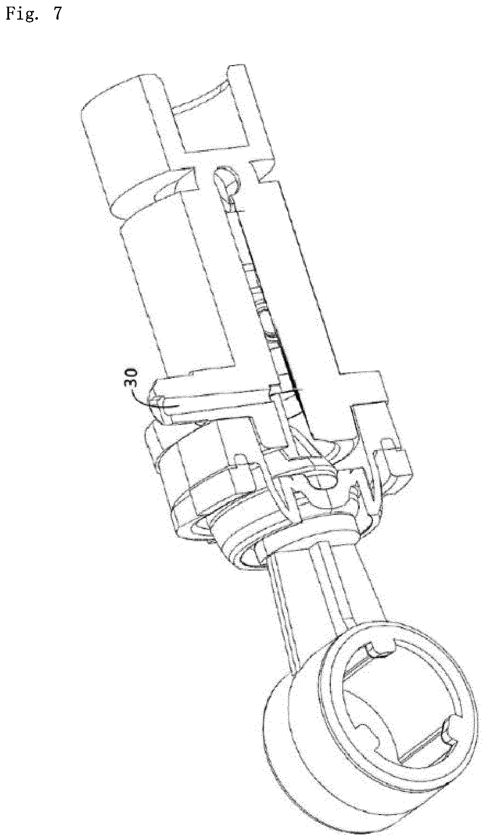

According to the first preferred embodiment of the present invention, especially, the first cavity V1 is in communication with the outside through a first through hole 30. As shown in FIGS. 5 and 7, the first through hole 30 is formed by penetrating the side wall of the piston cylinder 23 that defines the first cavity V1. Generally, the diameter of the first through hole 30 is significantly less than the inner diameter of the piston cylinder 23. In other alternative embodiments, the first through hole 30 may not be provided in the side wall of the piston cylinder 23, but may be provided in the sealing member 21. Preferably, the first through hole may be provided in a part of the sealing member 21 that is not deformed with the movement of the piston 24. In yet another alternative embodiment, the first through hole 30 may be configured to penetrate both the side wall of the piston cylinder 23 and the sealing member 21.

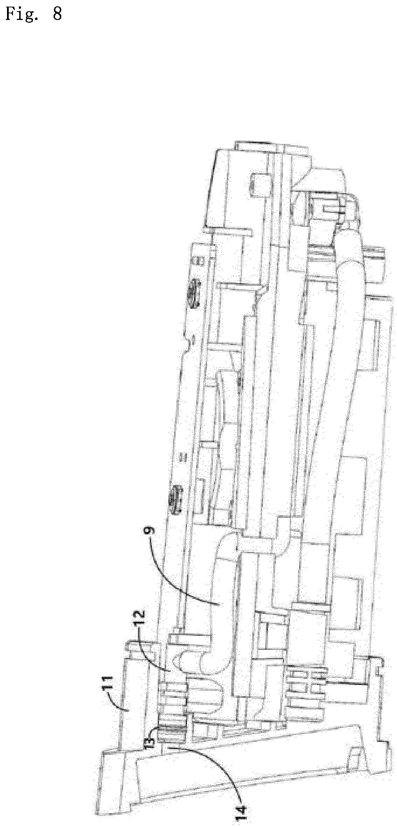

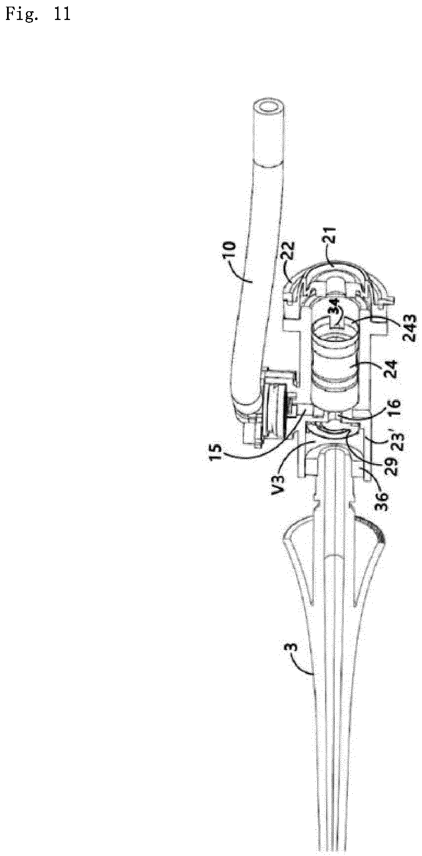

The first through hole 30 may also be connected to a space where a flow path of the liquid in the oral irrigator is located, the liquid storage portion 1 or a liquid pipeline thereof. In the first embodiment, as shown in FIG. 8, the first through hole 30 may be in communication with the liquid storage portion 1 outside the handle portion 2 by means of a communication pipe 9 and a communication interface 12 located outside the first cavity V1. Preferably, the liquid storage portion 1 of the oral irrigator may be connected to the handle portion 2 via a liquid storage portion holder 11 as shown in FIG. 11, and the liquid storage portion holder 11 is provided with a liquid storage portion holder communication hole 14 for connection with the communication interface 12. Preferably, a sealing member 13 of the connection interface may be provided at an end portion of the communication interface 12 to achieve the waterproof sealed connection between the communication interface 12 and the communication hole 14.

In other alternative implementations, the first through hole 30 is directly or indirectly in communication with the atmosphere outside the handle portion 2 or with other positions without waterproofing requirements.

If the liquid penetrates into the first cavity V1 enclosed by the sealing member, the piston 24 and the piston cylinder 23 (typically due to a failure of the sealing between the piston 24 and the piston cylinder 23), this part of the liquid may be discharged out of the first cavity V1 by means of an alternating pressure in the first cavity V1 thanks to the arrangement of the first through hole 30, and the separation of the liquid from electricity is thus ensured. Since the first cavity V1 formed by the sealing member 21 does not need to bear the pressure of the accumulated liquid, the service life of the sealing member 21 is prolonged, which improves the overall waterproofing level of the oral irrigator.

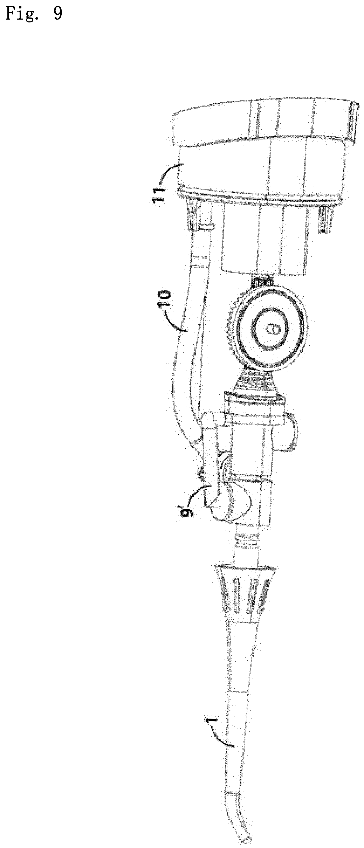

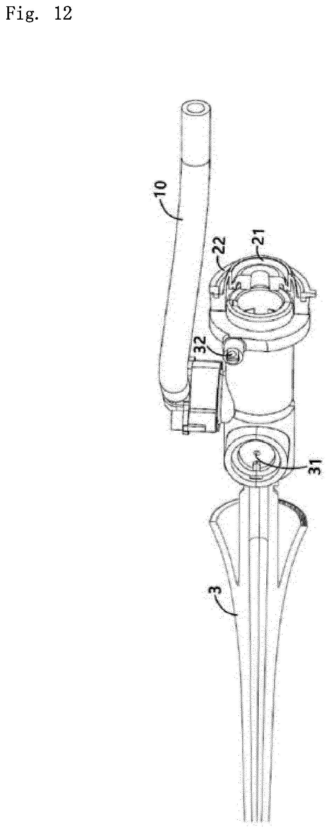

Next, an oral irrigator according to a second preferred embodiment of the present invention will be described with reference to FIGS. 9-12.

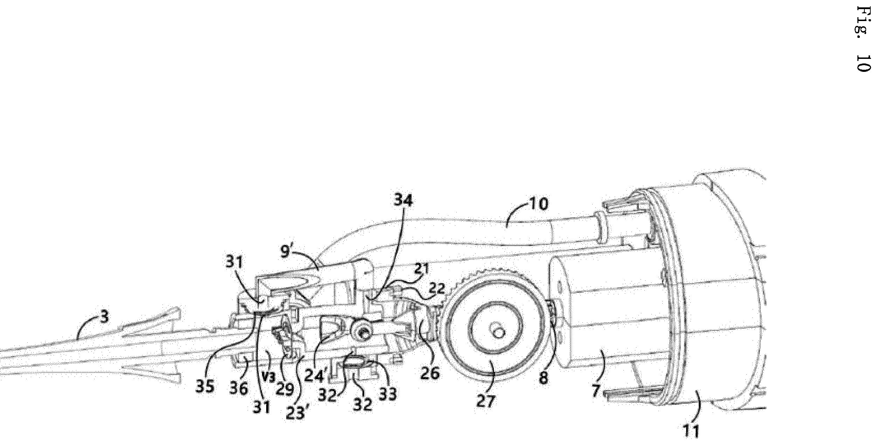

As shown in FIG. 10, basic structures of the piston 24' and the piston cylinder 23' in the second preferred embodiment are similar to the basic structures in the first preferred embodiment, the piston 24' and the piston cylinder 23' cooperate with each other to form the first cavity V1 and the second cavity V2 and are also provided with bowl-shaped sealing members 21, which will not be described again.

Different from the first embodiment, the first cavity V1 is provided with two through holes, namely a through hole 32 and a through hole 34. As shown in FIG. 10, the through hole 32 and the through hole 34 both penetrate the side wall of the piston cylinder 23', such that the inside of the first cavity V1 is in communication with the outside of the cavity. Preferably, the two through holes 32 and 34 are provided at two opposite ends along the inner diameter of the piston cylinder 23'.

It should be understood that in other alternative implementations, one or both of the through holes 32 and 34 may be configured to penetrate the sealing member 21, or penetrate both the side wall of the piston cylinder 23' and the sealing member 21.

One end of the through hole 32 is connected to the inside of the first cavity V1, and the other end thereof is opened to the outside of the first cavity V1 of the piston cylinder 23'. The through hole 32 is configured as a one-way passage which only allows air outside the piston cylinder 23' to enter but does not allow the fluid in the first cavity V1 to flow outwardly, and for this purpose, a one-way valve may be provided on the through hole 32. As shown in FIG. 10, preferably, the one-way valve 33 is provided in the middle of the through hole 32. As shown in FIG. 10, the through hole 32 comprises a section on the side wall of the piston cylinder 23' and a further section connected in a fitting manner to an interface of the side wall of the piston cylinder 23' from an outer side of the piston cylinder 23', the two sections of the through hole 32 are aligned with each other, and the one-way valve 33 is provided between the two sections of the through hole. The through hole 32 may be directly in communication with the outside of the shell of the handle portion 2, or may be open toward a water-free space in the handle portion.

In addition, the through hole 34 in the second embodiment is configured to communicate the first cavity V1 with a third cavity V3 serving as an additional ejection cavity. Preferably, the communication between the first cavity V1 and the through hole 34 of the third cavity V3 is achieved by means of a communication pipe 9'. As shown in FIG. 10, specifically, the fluid in the first cavity V1 enters the third cavity V3 through the through hole 34, the communication pipe 9' and an ejection hole 31 located at the third cavity V3. In a preferred embodiment, the third cavity V3 is formed by a cylindrical pipe section extending toward the nozzle portion from an end portion where the spout 16 of the piston cylinder 23' is located, and a port of the third cavity V3 that is connected to the through hole 34 is provided on a side wall of the cylindrical pipe section. In an alternative implementation, the cylindrical pipe section may be formed as a part of the nozzle portion 3. A sealing member 36 is preferably provided between the nozzle portion and the third cavity V3 to ensure the waterproof sealing between the nozzle portion and the third cavity.

The third cavity V3 is adjacent to the second cavity V2, the spout 16 of the second cavity V2 faces the third cavity V3, and the third cavity V3 is also separated from the nozzle portion 3 and the second cavity V2 by means of a one-way valve 29, such that the liquid delivered to the second cavity V2 can open the one-way valve 29 under a certain pressure to enter the third cavity V3, and further flow toward the nozzle portion 3. The one-way valve is arranged to only allow the liquid to enter the third cavity V3 from the second cavity V2, but not to allow the liquid to flow back from the third cavity V3 to the second cavity V2. Moreover, a one-way valve 35 is further provided in a flow path between the first cavity V1 and the third cavity V3, such that the fluid in the first cavity V1 is allowed to enter the third cavity V3 through the through hole 34, but is not allowed to reversely enter the first cavity V1 of the piston cylinder 23'. As shown in FIG. 10, the one-way valve 35 is provided in the vicinity of the side wall of the third cavity V3, that is, at the ejection hole 31. In other alternative implementations, the one-way valve 35 may be provided at the through hole 34 or a middle part of the communication pipe 9'.

In the second embodiment, the principle of suction and ejection of water in the second cavity V2 is similar to that in the first embodiment. When the piston moves toward the electric motor 7, the volume of the second cavity V2 becomes larger and the pressure becomes smaller, the water in the liquid storage portion 1 is suctioned into the second cavity V2 through the one-way valve 28 under the action of atmospheric pressure, and the one-way valve 29 is closed in this case. When the piston moves away from the electric motor 7, the volume of the second cavity V2 becomes smaller and the pressure becomes larger, the one-way valve 28 is closed, the one-way valve 29 is opened, and the liquid in the second cavity V2 flows toward the inner cavity of the nozzle portion 3 through the spout 16 (as shown in FIG. 11) and is injected into the oral cavity through the nozzle portion. These operations are cyclically repeated in this way.

Particularly, during use, when the piston moves toward the electric motor 7, since the volume of the piston entering the first cavity V1 is greater than the volume of the sealing member 21 withdrawn from the first cavity V1, the movement of the piston in this direction causes the volume of the first cavity V1 to become smaller and the pressure of the first cavity V1 to become larger, the one-way valve 33 is closed, and the air outside the piston cylinder 23' cannot enter the first cavity V1 through the through hole 32; meanwhile, the fluid in the first cavity V1 (the fluid is air under normal circumstances, and only when the movable sealing between the piston and the piston cylinder 23' fails, part of the liquid is accommodated in the first cavity V1) enters the third cavity V3 through the communication pipeline 9' and the one-way valve 35. In this way, a second fluid from the first cavity V1 is additionally added to the fluid originally coming from the liquid storage portion 1 and ejected through the nozzle portion 3, and the fluid ejected from the nozzle portion 3 becomes a gas or a liquid or a gas-liquid mixture. The second fluid is typically an oxygen-containing gas, anaerobic bacteria can be effectively removed by ejecting the oxygen-containing gas deep into the gingival sulcus, and the gums can be kept healthy. Compared with an existing method of adding active oxygen, a function of adding active oxygen is added by means of the alternating pressure of the first cavity V1, so that the manufacturing cost is lower.

When the piston moves away from the electric motor 7, since the volume of the piston entering the first cavity V1 is less than the volume of the sealing member 21 withdrawn from the first cavity V1, the movement of the piston in this direction causes the volume of the first cavity V1 to become larger and the pressure of the first cavity V1 to become smaller correspondingly, the one-way valve 33 is opened, and the air outside the piston cylinder 23' enters the first cavity V1 through the through hole 32; meanwhile, the one-way valve 35 is closed, and the fluid (typically a liquid) existing in the third cavity V3 does not flow back to the first cavity V1. In this way, the first cavity V1 is filled with air, such that the amount of air in the first cavity V1 is supplemented, the air in the first cavity V1 can be used in a next cycle, outside air enters the first cavity V1, and the air is injected into the third cavity V3 again. These operations are cyclically repeated in this way. The air from the outside of the piston cylinder 23' pushes the piston 24' away from the electric motor 7. Since the work done by the outside air on the piston 24' is added, the energy consumption of the oral irrigator is reduced accordingly.

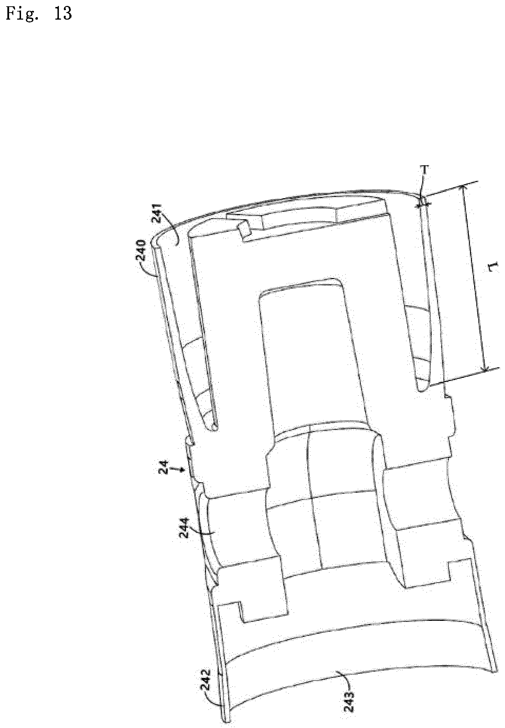

FIG. 13 shows a piston 24, which has a dual-seal structure and can improve the sealing effect under the alternating pressure of the first cavity V1.

Particularly, the first end and the second end of the piston 24 respectively form a first sealing portion 242 and a second sealing portion 240 which are sealed relative to the inner surface of the piston cylinder 23, 23', and pressures of the first cavity V1 and the second cavity V2 are alternated with the reciprocating movement of the piston 24 in the piston cavity, such that the first sealing portion 242 and the second sealing portion 240 alternately bear the pressures.

As shown in FIG. 13, the piston 24 has a first thin-walled portion 243 located at the first end and a second thin-walled portion 241 located at the second end. The first sealing portion 242 is formed on an outer peripheral end edge of the first thin-walled portion 243, and the second sealing portion 240 is formed on an outer peripheral end edge of the second thin-walled portion 241. In other words, the two sealing portions 240, 242 of the piston are respectively adjacent to the first cavity V1 and the second cavity V2. The inner surface 230 of the side wall of the piston cylinder 23' is in the shape of a cylinder or an outer side surface of a small-angle cone. Preferably, the outer side surface of the small-angle cone is less than 15 degrees. An outer surface of the piston 24 is substantially in the shape of a cylinder or an outer side surface of a small-angle cone. The first sealing portion 242 and the second sealing portion 240 of the piston 24 are both in an interference fit or at least in zero fit with the inner surface 230 of the side wall of the piston cylinder 23', so that the sealing portions 240, 242 on the outer peripheral end edges and the inner surface 230 of the side wall form sealing to prevent the fluid from flowing between the first cavity V1 and the second cavity V2.

Particularly, the shapes and the sizes of the first thin-walled portion 243 and the second thin-walled portion 241 and the selection of a material ensure that these thin-walled portions are deformable. The expression of "deformable" herein means that the thin-walled portions are flexible or trend to flex relative to the remaining part of the piston under the action of the pressure of the fluid. In other words, the first thin-walled portion 243 and the second thin-walled portion 241 are configured to be in a non-rigid state. In order to implement the deformable thin-walled portions, preferably, as shown in FIG. 13, the ratio of the length L to the thickness T of each of the first thin-walled portion 243 and the second thin-walled portion 241 is in a range of 20-40.

In alternative implementations, the sealing portions 240, 242 may be implemented by using the deformable characteristics of the elastic material itself.

As shown in FIG. 13, the first sealing portion 242 and the second sealing portion 240 are respectively located at the two ends of the piston 24. Apart from the first sealing portion 242 and the second sealing portion 240 of the piston 24 being in contact with the piston cylinder 23', there is a movement gap, that is, a clearance fit, between other outer surfaces of the piston 24 and the inner surface 230 of the side wall of the piston cylinder 23'. Therefore, from the perspective of the overall appearance, the sealing portions 240, 242 at the two ends of the piston 24 are "out-turned" relative to the middle portion of the piston. When the piston 24 moves toward the electric motor 7, the increased pressure in the first cavity V1 pushes the first thin-walled portion 243 of the piston, such that the first sealing portion 242 on the first thin-walled portion 243 tightly abuts against the inner surface of the piston cylinder, to strengthen the sealing between the piston and the piston cylinder 23'. When the piston 24 moves away from the electric motor 7, the high pressure in the second cavity V2 pushes the second thin-walled portion 241 of the piston 24, such that the second sealing portion 240 on the second thin-walled portion further abuts against the inner surface of the piston cylinder, to strengthen the sealing between the piston and the piston cylinder 23'. Therefore, by means of the alternating pressures of the first cavity V1 and the second cavity V2, the solution of the present invention ensures that at least one sealing portion is in a pressure-bearing state, and the sealing between the piston and the piston cylinder can thus be formed more reliably, compared with the solution in which the piston has only a single sealing portion.

It should be further noted that, in the case of using the piston having two sealing portions 240 and 242 as shown in FIG. 13, the first cavity V1 is formed by the sealing member, an end surface of one side of the first thin-walled portion 243 of the piston 24, and a section of the side wall of the piston cylinder (this section of the side wall is the first portion of the side wall of the piston cylinder) from the end surface of the first thin-walled portion 243 of the piston 24 to the sealing member; and the second cavity V2 is formed by an end portion of one side of the second thin-walled portion 241 of the piston 24 and a section of the side wall of piston cylinder (this section of the side wall is the second portion of the side wall of the piston cylinder) from the end portion of the second thin-walled portion 241 of the piston 24 to the spout 16.

As shown in FIG. 13, the first sealing portion 242 and the second sealing portion 240 at the two end portions of the piston are each formed by a complete circular edge. However, in an alternative implementation, as shown in FIG. 11, the first thin-walled portion 243 at the first end has a recess positioned to correspond to the through hole, so that a dual-seal and through-hole construction can be achieved while miniaturizing the piston and the piston cylinder.

Although the present invention is disclosed as above in terms of the preferred embodiments, they are not intended to limit the present invention, and those skilled in the art could all make possible changes and alterations without departing from the scope of the present invention as defined by the appended claims.

## Claims

1. An oral irrigator, comprising a plunger pump device for pumping a fluid, the plunger pump device comprising:
a piston cylinder (23, 23'), a piston cavity being enclosed by a side wall of the piston cylinder;
a piston (24, 24') arranged in the piston cavity for a reciprocating movement; and
a sealing member (21) connected to the piston cylinder in a sealing manner;
wherein a first cavity (V1) is enclosed by the piston, a first portion of the side wall of the piston cylinder and the sealing member; a second cavity (V2) is enclosed by the piston, and a second portion of the side wall of the piston cylinder, the second cavity is provided with an inlet (15) and a spout (16); the first cavity and the second cavity are respectively located at two opposite ends of the piston;
wherein a first through hole (34) for communicating the first cavity with an outside of the first cavity is provided, and
as a pressure of the first cavity alternately varies with the reciprocating movement of the piston in the piston cavity, the fluid in the first cavity is capable of flowing out of the first cavity through the first through hole,
**characterized in that** a third cavity (V3) is provided adjacent to the second cavity (V2), and a first one-way valve (29) is provided between the third cavity and the second cavity and is arranged to only allow the fluid to enter the third cavity from the second cavity through the spout,
wherein the first through hole (34) is in communication with the third cavity by means of a communication pipe (9'), and a second one-way valve (35) is provided between the first through hole and the third cavity and is arranged to only allow the fluid to enter the third cavity from the first cavity,
the plunger pump device is further provided with a second through hole (32) for communicating the first cavity with the outside of the first cavity, the second through hole is provided with a third one-way valve (33), which is arranged to only allow an external fluid to enter the first cavity through the second through hole.

2. The oral irrigator of claim 1, wherein
the oral irrigator comprises a liquid storage portion (1) which is in communication with the inlet (15) of the second cavity by means of a communication pipeline (10).

3. The oral irrigator of claim 2, wherein the first through hole (34) is provided in the sealing member (21) or the first portion of the side wall of the piston cylinder (23, 23'),
and the first through hole is in communication with the outside of a handle portion (2) of the oral irrigator by means of a communication pipe (9, 9').

4. The oral irrigator of claim 2, wherein the first through hole (34) is in communication with the liquid storage portion (1) or is connected to the communication pipeline (10) of the liquid storage portion.

5. The oral irrigator of claim 1, wherein the plunger pump device further comprises a transmission mechanism, the transmission mechanism comprising a driving gear (8) fixed to an output shaft of an electric motor (7), a driven crown gear (27) meshing with the driving gear, and a connecting rod (26) movably fitted with the driven crown gear,
wherein the connecting rod has a connecting portion (261) movably connected to a connecting cavity of the piston (24, 24'), and the connecting rod engages with the sealing member (21) in a sealing manner such that at least a part of the sealing member moves with the movement of the connecting rod,
the connecting portion has two opposite flat surfaces and a partial spherical surface connected to the opposite flat surfaces, and a pin (25) extends from the flat surfaces and is inserted into a pin hole (244) formed in the piston.

6. The oral irrigator of claim 1 or 2, wherein the piston (24, 24') has a first end close to the first cavity (V1) and a second end close to the second cavity (V2), and
the first end and the second end of the piston respectively form a first sealing portion (242) and a second sealing portion (240) which abut against an inner surface (230) of an internal cavity of the piston cylinder in a sealing manner.

7. The oral irrigator of claim 6, wherein the piston has a first deformable thin-walled portion (243) located at the first end and a second deformable thin-walled portion (241) located at the second end, the first sealing portion (242) is formed on an outer peripheral surface of an end portion of the first deformable thin-walled portion, and the second sealing portion (240) is formed on an outer peripheral surface of an end portion of the second deformable thin-walled portion.

8. The oral irrigator of claim 7, wherein the first deformable thin-walled portion (243) at the first end has a recess positioned to correspond to the first through hole (34).

9. The oral irrigator of claim 6
wherein pressures of the first cavity (V1) and the second cavity (V2) alternately vary with the reciprocating movement of the piston in the piston cavity, such that the first sealing portion (242) and the second sealing portion (240) alternately bear the pressures.

10. The oral irrigator of claim 9, wherein the first sealing portion (242) and the second sealing portion (240) are in an interference fit or zero fit with an inner surface (230) of the piston cylinder, and the remaining outer surface between the first sealing portion and the second sealing portion is in a clearance fit with the inner surface of the piston cylinder.

11. The oral irrigator of claim 9, wherein the piston has a first deformable thin-walled portion (243) located at the first end and a second deformable thin-walled portion (241) located at the second end, the first sealing portion (242) is formed on an outer peripheral end edge of the first thin-walled portion, and the second sealing portion (240) is formed on an outer peripheral end edge of the second thin-walled portion.

12. The oral irrigator of claim 10, wherein the ratio of the length (L) to the thickness (T) of each of the first thin-walled portion (243) and the second thin-walled portion (241) is in a range of 20-40.

## Patentansprüche

1. Munddusche, umfassend eine Kolbenpumpenvorrichtung zum Pumpen eines Fluids, wobei die Kolbenpumpenvorrichtung umfasst:
einen Kolbenzylinder (23, 23'), wobei ein Kolbenhohlraum von einer Seitenwand des Kolbenzylinders umschlossen wird;
einen Kolben (24, 24'), der für eine hin- und hergehende Bewegung in dem Kolbenhohlraum angeordnet ist; und
ein Dichtungselement (21), das in abdichtender Weise mit dem Kolbenzylinder verbunden ist;
wobei ein erster Hohlraum (V1) von dem Kolben, einem ersten Abschnitt der Seitenwand des Kolbenzylinders und dem Dichtungselement umschlossen wird; ein zweiter Hohlraum (V2) von dem Kolben und einem zweiten Abschnitt der Seitenwand des Kolbenzylinders umschlossen wird, wobei der zweite Hohlraum mit einem Einlass (15) und einem Auslass (16) versehen ist; wobei sich der erste Hohlraum und der zweite Hohlraum jeweils an zwei gegenüberliegenden Enden des Kolbens befinden;
wobei eine erste Durchgangsöffnung (34) zum Verbinden des ersten Hohlraums mit einem Bereich außerhalb des ersten Hohlraums vorgesehen ist, und
wenn sich ein Druck des ersten Hohlraums mit der hin- und hergehenden Bewegung des Kolbens in dem Kolbenhohlraum abwechselnd ändert, das Fluid in dem ersten Hohlraum durch die erste Durchgangsöffnung aus dem ersten Hohlraum herausströmen kann,
**dadurch gekennzeichnet, dass** ein dritter Hohlraum (V3) benachbart zu dem zweiten Hohlraum (V2) vorgesehen ist und ein erstes Einwegventil (29) zwischen dem dritten Hohlraum und dem zweiten Hohlraum vorgesehen und so angeordnet ist, dass es dem Fluid nur gestattet, aus dem zweiten Hohlraum durch den Auslass in den dritten Hohlraum einzutreten,
wobei die erste Durchgangsöffnung (34) mittels eines Verbindungsrohrs (9') mit dem dritten Hohlraum in Verbindung steht und ein zweites Einwegventil (35) zwischen der ersten Durchgangsöffnung und dem dritten Hohlraum vorgesehen und so angeordnet ist, dass es dem Fluid nur gestattet, aus dem ersten Hohlraum in den dritten Hohlraum einzutreten,
die Kolbenpumpenvorrichtung ferner mit einer zweiten Durchgangsöffnung (32) zum Verbinden des ersten Hohlraums mit dem Bereich außerhalb des ersten Hohlraums versehen ist, wobei die zweite Durchgangsöffnung mit einem dritten Einwegventil (33) versehen ist, das so angeordnet ist, dass es einem externen Fluid nur gestattet, durch die zweite Durchgangsöffnung in den ersten Hohlraum einzutreten.

2. Munddusche nach Anspruch 1, wobei
die Munddusche einen Flüssigkeitsspeicherabschnitt (1) umfasst, der mit dem Einlass (15) des zweiten Hohlraums mittels einer Verbindungsrohrleitung (10) in Verbindung steht.

3. Munddusche nach Anspruch 2, wobei die erste Durchgangsöffnung (34) in dem Dichtungselement (21) oder dem ersten Abschnitt der Seitenwand des Kolbenzylinders (23, 23') vorgesehen ist,
und die erste Durchgangsöffnung mit dem Bereich außerhalb eines Griffabschnitts (2) der Munddusche mittels eines Verbindungsrohrs (9, 9') in Verbindung steht.

4. Munddusche nach Anspruch 2, wobei die erste Durchgangsöffnung (34) mit dem Flüssigkeitsspeicherabschnitt (1) in Verbindung steht oder mit der Verbindungsrohrleitung (10) des Flüssigkeitsspeicherabschnitts verbunden ist.

5. Munddusche nach Anspruch 1, wobei die Kolbenpumpenvorrichtung ferner einen Übertragungsmechanismus umfasst, wobei der Übertragungsmechanismus ein Antriebszahnrad (8), das an einer Ausgangswelle eines Elektromotors (7) befestigt ist, ein mit dem Antriebszahnrad kämmendes angetriebenes Kronenrad (27) und eine beweglich mit dem angetriebenen Kronenrad zusammengefügte Pleuelstange (26) umfasst,
wobei die Pleuelstange einen Verbindungsabschnitt (261) aufweist, der beweglich mit einem Verbindungshohlraum des Kolbens (24, 24') verbunden ist, und die Pleuelstange mit dem Dichtungselement (21) in abdichtender Weise in Eingriff steht, sodass sich zumindest ein Teil des Dichtungselements mit der Bewegung der Pleuelstange bewegt,
der Verbindungsabschnitt zwei gegenüberliegende ebene Flächen und eine mit den gegenüberliegenden ebenen Flächen verbundene Teilkugelfläche aufweist und sich ein Stift (25) von den ebenen Flächen erstreckt und in ein in dem Kolben ausgebildetes Stiftloch (244) eingeführt ist.

6. Munddusche nach Anspruch 1 oder 2, wobei der Kolben (24, 24') ein erstes Ende nahe dem ersten Hohlraum (V1) und ein zweites Ende nahe dem zweiten Hohlraum (V2) aufweist, und
das erste Ende und das zweite Ende des Kolbens jeweils einen ersten Dichtungsabschnitt (242) und einen zweiten Dichtungsabschnitt (240) bilden, die in abdichtender Weise an einer Innenfläche (230) eines inneren Hohlraums des Kolbenzylinders anliegen.

7. Munddusche nach Anspruch 6, wobei der Kolben einen an dem ersten Ende befindlichen ersten verformbaren dünnwandigen Abschnitt (243) und einen an dem zweiten Ende befindlichen zweiten verformbaren dünnwandigen Abschnitt (241) aufweist, der erste Dichtungsabschnitt (242) an einer äußeren Umfangsfläche eines Endabschnitts des ersten verformbaren dünnwandigen Abschnitts ausgebildet ist und der zweite Dichtungsabschnitt (240) an einer äußeren Umfangsfläche eines Endabschnitts des zweiten verformbaren dünnwandigen Abschnitts ausgebildet ist.

8. Munddusche nach Anspruch 7, wobei der erste verformbare dünnwandige Abschnitt (243) an dem ersten Ende eine Aussparung aufweist, die so positioniert ist, dass sie der ersten Durchgangsöffnung (34) entspricht.

9. Munddusche nach Anspruch 6
wobei sich Drücke des ersten Hohlraums (V1) und des zweiten Hohlraums (V2) mit der hin- und hergehenden Bewegung des Kolbens in dem Kolbenhohlraum abwechselnd ändern, sodass der erste Dichtungsabschnitt (242) und der zweite Dichtungsabschnitt (240) abwechselnd die Drücke tragen.

10. Munddusche nach Anspruch 9, wobei der erste Dichtungsabschnitt (242) und der zweite Dichtungsabschnitt (240) mit einer Innenfläche (230) des Kolbenzylinders in einer Übermaßpassung oder Nullpassung stehen und die verbleibende Außenfläche zwischen dem ersten Dichtungsabschnitt und dem zweiten Dichtungsabschnitt mit der Innenfläche des Kolbenzylinders in einer Spielpassung steht.

11. Munddusche nach Anspruch 9, wobei der Kolben einen an dem ersten Ende befindlichen ersten verformbaren dünnwandigen Abschnitt (243) und einen an dem zweiten Ende befindlichen zweiten verformbaren dünnwandigen Abschnitt (241) aufweist, der erste Dichtungsabschnitt (242) an einer äußeren Umfangsendkante des ersten dünnwandigen Abschnitts ausgebildet ist und der zweite Dichtungsabschnitt (240) an einer äußeren Umfangsendkante des zweiten dünnwandigen Abschnitts ausgebildet ist.

12. Munddusche nach Anspruch 10, wobei das Verhältnis der Länge (L) zur Dicke (T) jedes des ersten dünnwandigen Abschnitts (243) und des zweiten dünnwandigen Abschnitts (241) in einem Bereich von 20-40 liegt.

## Revendications

1. Irrigateur buccal, comprenant un dispositif de pompe à piston pour pomper un fluide, le dispositif de pompe à piston comprenant :
un cylindre à piston (23, 23'), une cavité à piston étant enfermée par une paroi latérale du cylindre à piston ;
un piston (24, 24') agencé dans la cavité à piston pour un mouvement de va-et-vient ; et
un élément d'étanchéité (21) connecté au cylindre à piston de manière étanche ;
dans lequel une première cavité (V1) est enfermée par le piston, une première portion de la paroi latérale du cylindre à piston et l'élément d'étanchéité ; une deuxième cavité (V2) est enfermée par le piston, et une seconde portion de la paroi latérale du cylindre à piston, la deuxième cavité est pourvue d'une entrée (15) et d'une sortie d'éjection (16) ; la première cavité et la deuxième cavité sont respectivement situées aux deux extrémités opposées du piston ;
dans lequel un premier trou traversant (34) pour faire communiquer la première cavité avec un extérieur de la première cavité est prévu, et
à mesure qu'une pression de la première cavité varie alternativement avec le mouvement de va-et-vient du piston dans la cavité à piston, le fluide dans la première cavité est capable de s'écouler de la première cavité à travers le premier trou traversant,
**caractérisé en ce qu'**une troisième cavité (V3) est prévue adjacente à la deuxième cavité (V2), et qu'une première vanne unidirectionnelle (29) est prévue entre la troisième cavité et la deuxième cavité et est agencée pour permettre uniquement au fluide d'entrer dans la troisième cavité à partir de la deuxième cavité à travers la sortie d'éjection,
dans lequel le premier trou traversant (34) est en communication avec la troisième cavité au moyen d'un tuyau de communication (9'), et une deuxième vanne unidirectionnelle (35) est prévue entre le premier trou traversant et la troisième cavité et est agencée pour permettre uniquement au fluide d'entrer dans la troisième cavité à partir de la première cavité,
le dispositif de pompe à piston est en outre pourvu d'un second trou traversant (32) pour faire communiquer la première cavité avec l'extérieur de la première cavité, le second trou traversant est pourvu d'une troisième vanne unidirectionnelle (33), qui est agencée pour permettre uniquement à un fluide externe d'entrer dans la première cavité par le second trou traversant.

2. Irrigateur buccal selon la revendication 1, dans lequel
l'irrigateur buccal comprend une portion de stockage de liquide (1) qui est en communication avec l'entrée (15) de la deuxième cavité au moyen d'une canalisation de communication (10).

3. Irrigateur buccal selon la revendication 2, dans lequel le premier trou traversant (34) est prévu dans l'élément d'étanchéité (21) ou la première portion de la paroi latérale du cylindre à piston (23, 23'),
et le premier trou traversant est en communication avec l'extérieur d'une portion de poignée (2) de l'irrigateur buccal au moyen d'un tuyau de communication (9, 9').

4. Irrigateur buccal selon la revendication 2, dans lequel le premier trou traversant (34) est en communication avec la portion de stockage de liquide (1) ou est connecté à la canalisation de communication (10) de la portion de stockage de liquide.

5. Irrigateur buccal selon la revendication 1, dans lequel le dispositif de pompe à piston comprend en outre un mécanisme de transmission, le mécanisme de transmission comprenant un engrenage d'entraînement (8) fixé à un arbre de sortie d'un moteur électrique (7), une couronne à denture (27) entraînée en prise avec l'engrenage d'entraînement, et une tige de connexion (26) montée de manière mobile avec la couronne à denture entraînée,
dans lequel la tige de connexion présente une portion de connexion (261) connectée de manière mobile à une cavité de connexion du piston (24, 24'), et la tige de connexion est en prise avec l'élément d'étanchéité (21) de manière étanche de sorte qu'au moins une partie de l'élément d'étanchéité se déplace avec le mouvement de la tige de connexion,
la portion de connexion présente deux surfaces planes opposées et une surface sphérique partielle connectée aux surfaces planes opposées, et une goupille (25) s'étend à partir des surfaces planes et est insérée dans un trou de goupille (244) formé dans le piston.

6. Irrigateur buccal selon la revendication 1 ou 2, dans lequel le piston (24, 24') présente une première extrémité proche de la première cavité (V1) et une seconde extrémité proche de la deuxième cavité (V2), et
la première extrémité et la seconde extrémité du piston forment respectivement une première portion d'étanchéité (242) et une seconde portion d'étanchéité (240) qui butent contre une surface interne (230) d'une cavité interne du cylindre à piston de manière étanche.

7. Irrigateur buccal selon la revendication 6, dans lequel le piston présente une première portion à paroi mince déformable (243) située à la première extrémité et une seconde portion à paroi mince déformable (241) située à la seconde extrémité, la première portion d'étanchéité (242) est formée sur une surface périphérique extérieure d'une portion d'extrémité de la première portion à paroi mince déformable, et la seconde portion d'étanchéité (240) est formée sur une surface périphérique extérieure d'une portion d'extrémité de la seconde portion à paroi mince déformable.

8. Irrigateur buccal selon la revendication 7, dans lequel la première portion à paroi mince déformable (243) à la première extrémité présente un évidement positionné pour correspondre au premier trou traversant (34).

9. Irrigateur buccal selon la revendication 6,
dans lequel les pressions de la première cavité (V1) et de la deuxième cavité (V2) varient alternativement avec le mouvement de va-et-vient du piston dans la cavité à piston, de sorte que la première portion d'étanchéité (242) et la seconde portion d'étanchéité (240) supportent alternativement les pressions.

10. Irrigateur buccal selon la revendication 9, dans lequel la première portion d'étanchéité (242) et la seconde portion d'étanchéité (240) sont en ajustement par interférence ou ajustement zéro avec une surface interne (230) du cylindre à piston, et la surface externe restante entre la première portion d'étanchéité et la seconde portion d'étanchéité est en ajustement par jeu avec la surface interne du cylindre à piston.

11. Irrigateur buccal selon la revendication 9, dans lequel le piston présente une première portion à paroi mince déformable (243) située à la première extrémité et une seconde portion déformable à paroi mince (241) située à la seconde extrémité, la première portion d'étanchéité (242) est formée sur un bord d'extrémité périphérique externe de la première portion à paroi mince déformable, et la seconde portion d'étanchéité (240) est formée sur un bord d'extrémité périphérique externe de la seconde portion à paroi mince.

12. Irrigateur buccal selon la revendication 10, dans lequel le rapport de la longueur (L) à l'épaisseur (T) de chacune de la première portion à paroi mince (243) et de la seconde portion à paroi mince (241) est dans une plage de 20-40.
